# EUROPEAN PATENT SPECIFICATION

(11) **EP 0 420 406 B1**
(45) Date of publication and mention of the grant of the patent: **12.07.1995**
(21) Application number: 90308904.3
(22) Date of filing: 14.08.1990
(51) Int. Cl.: B25B 1/20

(54) **Position & angle of polar adjustable vice**
In Polarkoordinaten einstellbarer Schraubstock
Etau ajustable dans des coordonnées polaires

(30) Priority: 27.09.1989 US 413297
(43) Date of publication of application: 03.04.1991
(60) Divisional application: 94120949.6
(73) Proprietor: Yang, Tai-Her, Taipei (TW)
(72) Inventor: Yang, Tai-Her, Taipei (TW)
(74) Representative: Arthur, Bryan Edward

(56) References cited:
- US-A- 2 502 784

## Description

The present invention relates to adjustable angle vices and, in particular, to adjustable angle vices that are simultaneously adjustable in a plurality of directions for positioning and working on a workpiece.

### Background of the Invention

Vices for clamping workpieces often utilize drills that are driven along longitudinal axes of the drill. With such drills (except during heavy-duty working), the workpieces are held steady with manpower while the drill itself is moved horizontally. Use of such an arrangement can be quite limited, especially when large or irregularly shaped workpieces are involved.

Other devices of which I am aware include two-way vices that provide for positive positioning of a vice in two directions (coordinates).

### Summary of the Invention

An object of the present invention is the provision of an adjustable angle vice that may be moved in a plurality of different directions (coordinates) for the clamping and moving of a workpiece.

It is a further object of the present invention to provide such an adjustable angle vice that may be moved in pivotal and rotational directions (coordinates), as well as in a first horizontal direction (coordinate) and a second horizontal direction (coordinate).

It is a still further object of the present invention to provide such an adjustable angle vice that may further move in a vertical direction (coordinate), so as to provide for horizontal adjustability of the vice.

US-A-2502784 (Fahlander) describes a vice having adjustable jaws movable relative to each other. In particular, Fahlander discloses an adjustable angle vice for clamping a workpiece and comprising a foot plate, a base frame and an upper frame; the upper frame including at least one pair of clamping jaws at least one of said clamping jabs being movable against the other for the selective clamping and unclamping of workpieces there-between, the upper frame being supported by the base frame firstly by means of a pair of pivots and secondly by means of a pair of lateral cheeks or struts pivotally secured to the base frame at respective pivot points and including respective trackways each accommodating a slide fixed to the upper frame and slidable in said trackway when the upper frame is pivoted about said pivot points, said slides further being adapted to aid in fixing and securing the upper frame in the pivoted position selected; the base frame being rotatably supported by the foot plate for rotational movement of the base frame about a vertical axis relative to the foot plate the latter being secured to a support.

According to the present invention, the adjustable vice as described above is characterised in that the base frame has a pair of substantially parallel longitudinal trackways formed therein, the pivots connecting the upper frame to the base frame are slidably received in said longitudinal trackways of the base frame such that the upper frame is slidable in a first horizontal direction relative to the base frame and to said struts, whereby the slides are sliding in the trackways of the struts; the base frame further has a third longitudinal trackway facing the foot plate, and the foot plate further has an internally threaded boss, and a vertical, upstanding rod the lower end of which is threaded for rotatable engagement with the boss of the foot plate and the upper end of which carries a rotatable lug, said lug being received in the third longitudinal trackway of the base frame so that the base frame is slidable in a second horizontal direction and so that rotation of the rod in the boss vertically moves the rod for causing vertical movement of the base frame carrying the upper frame and the clamping jaws.

In accordance with the teachings of the present invention there is disclosed an adjustable angle vice for clamping a workpiece. This vice includes the combination of a base frame having a pair of substantially parallel longitudinal trackways formed therein. An upper frame is supported by the base frame. The upper frame includes at least one pair of clamping jaws. At least one of said clamping jaws is movable toward the other for the selective clamping and unclamping of workpieces therebetween. A pair of sliding pivots are rotatable carried by the upper frame, such that the upper frame pivots about the sliding pivots for pivotal movement of the upper frame and the clamping jaws carried thereby in a pivotal direction (coordinate). Each of the sliding pivots is further slidingly received in respective trackways of the base frame, such that the upper frame is supported by the base frame, and further such that the upper frame and the clamping jaws carried thereby are horizontally slidably movable for sliding movement of the upper frame and the clamping jaws carried thereby in a first horizontal direction (coordinate). A pair of lateral cheeks having respective first ends are provided. The first ends of the cheeks are pivotally secured to the base frame at respective pivot points for pivotal movement of the cheeks about the pivot points relative to the base in response to the pivotal movement of the upper frame including the clamping jaws carried thereby. Each of the lateral cheeks has a respective trackway formed therein. A pair of slides are provided. Each slide is received through one of the respective trackways formed in the lateral cheeks and is fixed to the upper frame. In this fashion, the slides freely slide in the trackways of the cheeks when the upper frame is pivoted, and the slides aid in fixing and securing the upper frame in the pivoted position selected. The base frame further has a third longitudinal trackway formed therein. A foot plate is received on and secured to the support. An upstanding rod having a vertical axis is also provided. This rod includes a lower end and an opposite upper end having a rotatable lug carried thereon. The rod is positioned, such that the lug is received in the third longitudinal trackway being seated therein. In this manner, the base frame and the upper frame carried thereby are horizontally slidably movable for further sliding movement of the upper frame and the clamping jaws carried thereby in a second horizontal direction (coordinate). The lower end of the rod is rotatably carried by the foot plate for rotational movement of the rod about the vertical axis. In this fashion, the base frame and the upper frame carried thereby are rotatably carried by the rod for rotational movement of the upper frame including the first and second clamping jaws carried thereby in a rotational direction (coordinate).

### Brief description of the Drawings

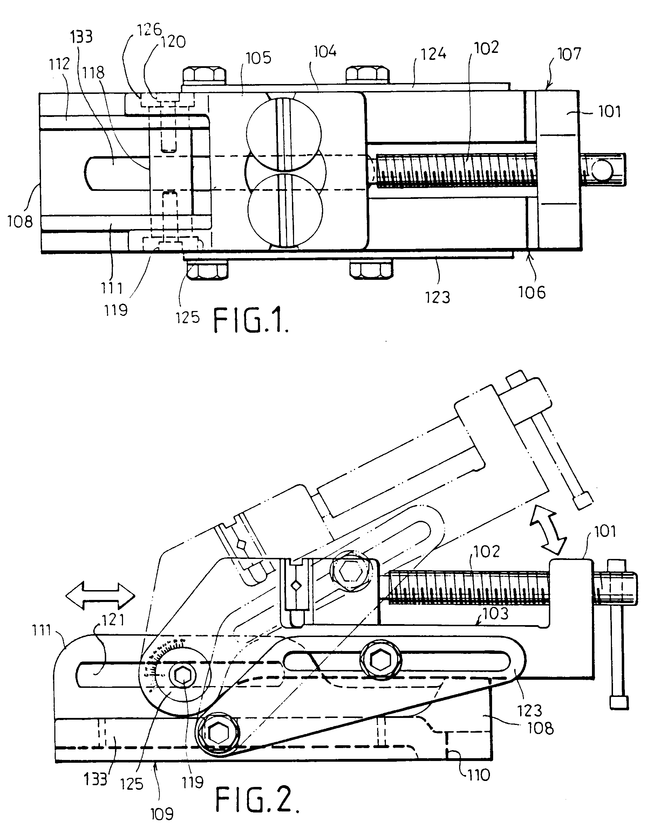

A vice in accordance with the present invention will now be described by way of example with reference to the accompanying drawings in which:-
Figure 1 is a plan view of an adjustable vice according to the present invention;
Figure 2 is a side view of the vice of figure 1 illustrating, in phantom lines pivotal movement of an upper frame relative to a base frame in a pivotal direction (coordinate);
Figure 3 is an exploded perspective of a second embodiment of an adjustable angle vice of the present invention;

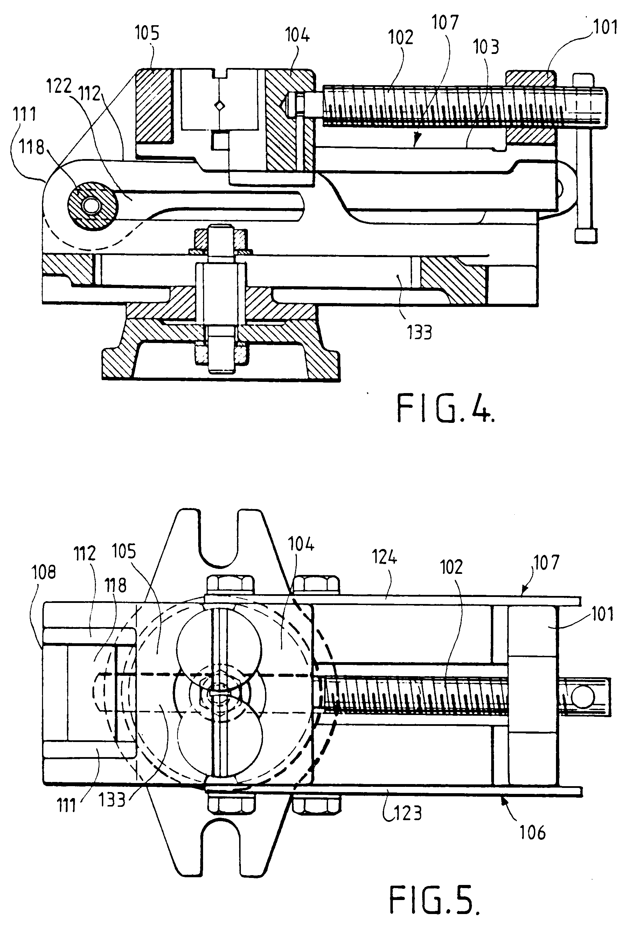

Figure 4 is a side view, partly in cross-section of the vice of Figure 3; and
Figure 5 is a plan view of the vice of Figure 3, with portions thereof shown in phantom lines for the sake of clarity.

### Description of preferred Embodiments

Referring to the drawings, the adjustable angle vice of the present invention includes an upper frame 101 and a base frame 108. The upper frame 101 is supported by the base frame 108 for simultaneous movement in angular two horizontal and vertical directions (coordinates), as will be discussed below.

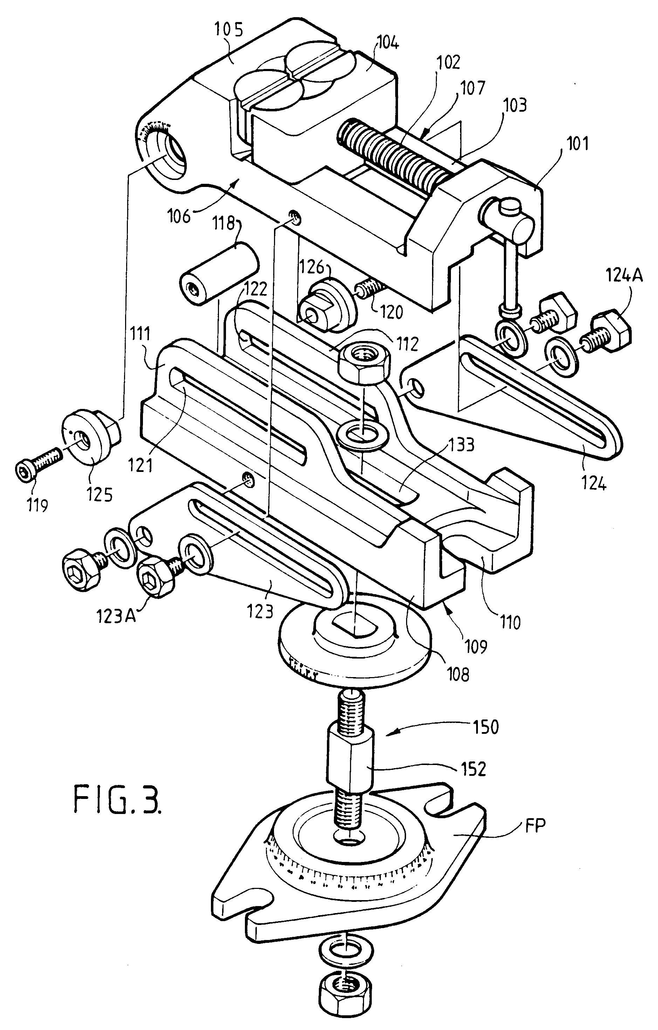

The upper frame 101 includes at least one first 104 and one second 105 clamping jaw. At least one of the clamping jaws 104, 105 is movable towards the other for the selective clamping and unclamping of workpieces therebetween. The clamping jaw 104 is slidable horizontally with the use of guide rod 102 and slide rails 103 (see Figure 3). The upper frame 101 further includes substantially parallel vertical side walls 106 and 107 in which respective sliding pivot apertures are formed.

The base frame 108 includes a lower portion 109. Holes or grooves 110 are formed in a forward end of the lower portion 109 for optional fixing the base frame 108 to a support by use of, for example, bolts. Upwardly-extending parallel longitudinal arms 111 and 112 are formed on each side of the base frame 108. Each of the arms 111 and 112 has a longitudinal trackway 121 and 122, which are substantially parallel.

A pair of sliding pivots 125 and 126 are rotatably carried by the upper frame 101, such that the upper frame 101 and the clamping jaws 104, 105 carried thereby can pivot about the sliding pivots 125 and 126 relative to the base frame 108. Each of the sliding pivots 125 and 126 is slidably received in a respective trackway 121 and 122. The upper frame 101 and the clamping jaws 104 and 105 are thus horizontally movable relative to the base frame 108 in a first horizontal direction (coordinate). Also in this fashion, the upper frame 101 is supported and carried by the base frame 108.

The sliding pivots 125 and 126 are further received in the respective sliding pivot apertures formed in the side walls 106 and 107. Positioned thus, the pivots 125 and 126 may be selectively adjustably tightened and loosened by use of bolts 119 and 120, that are rotatably received in a lateral shaft 118 located between the wings 111 and 112. Such tightening secures the upper frame 101 in a selected pivoted position. Loosening of the bolts 119 and 120 permits pivoting of the upper frame 101 in the pivotal direction (coordinate) relative to the base frame 108, as described above.

Disposed on either side of the frames 101 and 108 are a pair of lateral cheeks 123 and 124. The cheeks 123 and 124 have their respective first ends pivotally secured to the base frame 108. This enables pivotal movement of the cheeks 123 and 124 in an angular direction relative to the base frame 108 about the pivot points in response to the pivotal movement of the upper frame 101 including the clamping jaws 104 and 105 carried thereby in the pivotal direction (coordinate). Each of the cheeks 123 and 124 has a respective trackway formed therein as clearly shown in Figure 3.

A pair of slide bolts 123A and 124A are received through a respective trackway formed in the cheeks 123 and 124 with the respective heads thereof preventing the disengagement of the slides from the respective trackways. In addition the bolts 123A, 124A serve to fix the upper frame 101 at a location that is spaced from the sliding pivots 125 and 126. In this fashion, the slide bolts 123A, 124A freely slide in the trackways of the cheeks 123 and 124 when the upper frame 101 is pivoted in the pivotal direction (coordinate). In addition the slide bolts 123A and 124A assist in fixing and securing the upper frame 101 in the pivoted position selected.

A third longitudinal trackway 133 is formed in the base frame 108 and means is provided for securing the base frame 108 to a support such as a bench. Preferably, the means permits for the vice and, in particular for the upper frame 101 and the clamping jaws 104 and 105 carried thereby, to be rotationally moved in a rotational direction (coordinate) in a horizontal plane. In this fashion, the upper frame 101, including the clamping jaws 104 and 105 carried thereby, may be rotationally adjusted and positioned.

The means for securing the vice to a support includes a foot plate FP that is received on and secured to a bench by any suitable means, such as bolts.

An upstanding externally-threaded rod 150 includes a lower threaded end, an upper threaded end and an enlarged lug portion 152 located at substantially the upper end of the rod. The threads of the rod mutually-engage the threads of a boss on the foot plate FP so that the lower end of the rod is rotatably received in the threaded boss and carried by the foot plate for rotational movement in the rotational direction. It is noted that rotational movement of the rod in the rotational direction about the vertical axis raises and lowers the height of the rod in the foot plate.

The upper end of the rod is located in the base frame 108 in the third longitudinal trackway 133 formed in the base frame 108.

Use of the rotatable lug in the third longitudinal trackway 133 of the base frame 108 permits sliding movement of the upper frame 101, including the clamping jaws 104 and 105 carried thereby, in a second horizontal direction (coordinate). In this arrangement, the upper end of the rod 150 is received through the third trackway 133 and the lug 152 is slidingly seated therein. This permits the base frame 108 and the upper frame 101, including the clamping jaws 104 and 105 carried thereby, to be slidingly moved in a second horizontal direction (coordinate). In this fashion, the positioning of the clamping jaws 104 and 105 may be selectively moved and adjusted along two different horisontal directions (coordinates).

It is preferred to equip the vice with various indicia, so that the amount of movement of the vice and, in particular, of the upper frame of the vice, may be visually indicated. In this respect, indicia is formed on the sliding pivots 125 and 126 and the upper frame 101 that interact for visually indicating the pivotal position of the upper frame 101 including the clamping jaws 104 and 105 carried thereby. Further in this respect, the foot plate FP and the rod have indicia formed thereon that interact for visually indicating the rotational position of the upper frame 101, including the clamping faces 104 and 105 carried thereby.

## Claims

1. An adjustable angle vice for clamping a workpiece and comprising a foot plate, a base frame (108) and an upper frame (101);
the upper frame (101) including at least one pair of clamping jaws (104,105) at least one of said clamping jaws (104) being movable against the other (105) for the selective clamping and unclamping of workpieces therebetween, the upper frame being supported by the base frame (108) firstly by means of a pair of pivots (125,126) and secondly by means of a pair of lateral cheeks or struts (123,124) pivotally secured to the base frame (108) at respective pivot points and including respective trackways each accommodating a slide (126) fixed to the upper frame (101) and slidable in said trackway when the upper frame (101) is pivoted about said pivot points, said slides further being adapted to aid in fixing and securing the upper frame (101) in the pivoted position selected;
the base frame (108) being rotatably supported by the foot plate for rotational movement of the base frame (108) about a vertical axis relative to the foot plate the latter being secured to a support,
characterised in that the base frame (108) has a pair of substantially parallel longitudinal trackways (121,122) formed therein,
the pivots (125,126) connecting the upper frame (101) to the base frame (108) are slidably received in said longitudinal trackways (121,122) of the base frame (108) such that the upper frame (101) is slidable in a first horizontal direction relative to the base frame (108) and to said struts, whereby the slides (126) are sliding in the trackways of the struts (123, 124);
the base frame (108) further has a third longitudinal trackway facing the foot plate, and the foot plate further has an internally threaded boss, and
a vertical, upstanding rod the lower end of which is threaded for rotatable engagement with the boss of the foot plate and the upper end of which carries a rotatable lug, said lug being received in the third longitudinal trackway of the base frame (108) so that the base frame (108) is slidable in a second horizontal direction and so that rotation of the rod in the boss vertically moves the rod for causing vertical movement of the base frame (108) carrying the upper frame (101) and the clamping jaws (104, 105).

2. The combination of claim 1, characterised in that sliding pivots (125, 126) and the upper frame (101) include indicia thereon for visually indicating the pivotal position of the upper frame (101) including the clamping jaws (104, 105) carried thereby.

3. The combination of claim 1, characterised in that the foot plate and the rod include indicia thereon for visually indicating the rotational position of the upper frame (101) including the clamping jaws (104, 105) carried thereby.

## Patentansprüche

1. Im Winkel einstellbarer Schraubstock zum Spannen eines Werkstückes, der eine Fußplatte, ein Grundgestell (108) und ein oberes Gestell (101) aufweist;
wobei das obere Gestell (101) zumindest ein Paar Spannbacken (104, 105) beinhaltet, von denen zumindest eine der besagten Spannbacken (104) gegen die andere (105) hin für wahlweises Spannen und Freigeben von dazwischen befindlichen Werkstücken bewegbar ist, das obere Gestell durch das Grundgestell (108) erstens mittels eines Paares von Schwenklagern (125, 126) und zweitens mittels eines Paares seitlicher Wangen oder Holme (123, 124) getragen ist, welche an dem Grundgestell (108) an betreffenden Schwenklagerstellen schwenkbar befestigt sind und betreffende Führungsbahnen beinhalten, die jede ein Gleitstück (126) aufnehmen, das an dem oberen Gestell (101) befestigt und in der genannten Führungsbahn verschiebbar ist, wenn das obere Gestell (101) um die genannten Schwenklagerstellen geschwenkt wird, wobei die genannten Gleitstücke außerdem dazu eingerichtet sind, um bei Fixierung und Sicherung des oberen Gestells (101) in den ausgewählten Schwenkpositionen mitzuhelfen;
wobei das Grundgestell (108) durch die Fußplatte für eine Drehbewegung des Grundgestells (108) um eine vertikale Achse relativ zu der Flußplatte drehbar getragen ist, welche letztere an einem Träger befestigt ist,
dadurch gekennzeichnet, daß das Grundgestell (108) ein Paar im wesentlicher paralleler, längsverlaufender, in ihm ausgebildeter Führungsbahnen (121, 122) aufweist,
die das obere Gestell (101) mit dem Grundgestell (108) verbindenden Schwenklager (125, 126) verschiebbar in den genannten längsverlaufenden Führungsbahnen (121, 122) des Grundteiles (108) aufgenommen sind, so daß das obere Gestell (101) in einer ersten horizontalen Richtung relativ zu dem Grundgestell (108) und zu den genannten Holmen verschiebbar ist, wobei die Gleitstücke (126) in den Führungsbahnen der Holme (123, 124) gleiten;
das Grundgestell (108) außerdem eine dritte, längsverlaufende, der Fußplatte zugekehrte Führungsbahn besitzt und die Fußplatte außerdem ein mit Innengewinde versehenes Auge aufweist, und
ein vertikaler, aufrechtstehender Stab, dessen unteres Ende für den drehbaren Eingriff mit dem Auge der Fußplatte mit Gewinde versehen ist, an seinem oberen Ende einen drehbaren Zapfen trägt, wobei besagter Zapfen in der dritten längsverlaufenden Führungsbahn des Grundgestells (108) aufgenommen ist, so daß das Grundgestell (108) in einer zweiten horizontalen Richtung verschiebbar ist und daß die Drehung des Stabes in dem Auge den Stab vertikal bewegt, um eine vertikale Bewegung des Grundgestells (108) zu bewirken, welches das obere Geste] (108) und die Spannbacken (104, 105) trägt.

2. Die Kombination von Anspruch 1, dadurch gekennzeichnet, daß die gleitenden Schwenklager (125, 126) und das obere Gestell (101) an ihnen befindliche Kennzeichen beinhalten, um die Schwenkposition des oberen Gestells (101) einschließlich der von ihm getragenen Spannbacken (104, 105) sichtbar anzuzeigen.

3. Die Kombination von Anspruch 1, dadurch gekennzeichnet, daß die Fußplatte und der Stab an ihnen befindliche Kennzeichen beinhalten, um die Drehstellung des oberen Gestells (101) einschließlich der von ihm getragenen Spannbacken (104, 105) sichtbar anzuzeigen.

## Revendications

1. Etau à angle réglable pour le serrage d'une pièce à usiner et comportant une plaque de base, un cadre de base (108) et un cadre supérieur (101);
le cadre supérieur (101) comprenant au moins un couple de mâchoires de serrage (104,105), au moins l'une desdites mâchoires de serrage (104) étant déplaçable par rapport à l'autre (105) pour le serrage et le desserrage sélectif de pièces à usiner entre ces mâchoires, le cadre supérieur étant supporté par le cadre de base (108), en premier lieu au moyen d'un couple de pivots (125,126) et en second lieu au moyen d'un couple de flasques ou de montants latéraux (123,124) fixés de manière à pouvoir pivoter au cadre de base (108) en des points respectifs de pivotement et comprenant des glissières respectives logeant chacune un coulisseau (126) fixé au cadre supérieur (101) et pouvant glisser dans ladite piste lorsque le cadre supérieur (101) pivote autour desdits points de pivotement, lesdites glissières étant en outre adaptées pour faciliter la fixation et le blocage du cadre supérieur (101) dans la position pivotée sélectionnée;
le cadre de base (108) étant supporté de manière à pouvoir tourner par la plaque de base de manière à permettre un mouvement de rotation du cadre de base (108) autour d'un axe perpendiculaire par rapport à la plaque de base, cette dernière étant fixée à un support,
caractérisé en ce que le cadre de base (108) possède un couple de glissières longitudinales essentiellement parallèles (121, 122) formées en lui,
les pivots (125,126) raccordant le cadre supérieur (101) au cadre de base (108) sont logés avec possibilité de glissement dans lesdites glissières longitudinales (121,122) du cadre de base (108) de sorte que le cadre supérieur (101) peut glisser dans une première direction horizontale par rapport au cadre de base (108) et par rapport auxdits montants, ce qui a pour effet que les coulisseaux (126) glissent dans les glissières des montants (123,124);
le cadre de base (108) possède en outre une troisième glissière longitudinale qui est située en vis-à-vis de la plaque de base, et la plaque de base possède en outre un bossage taraudé, et
une tige verticale supérieure, dont l'extrémité inférieure est filetée de manière à engrener avec possibilité de rotation avec le bossage de la plaque de base et dont l'extrémité supérieure porte une patte rotative, ladite patte étant logée dans la troisième glissière longitudinale du cadre de base (108) de sorte que le cadre de base (108) peut glisser dans une seconde direction horizontale et de telle sorte que la rotation de la tige dans le bossage déplace verticalement cette tige, de manière à déplacer verticalement le cadre de base (108) portant le cadre supérieur (101) et les mâchoires de serrage (104,105).

2. Combinaison selon la revendication 1, caractérisée en ce que les pivots coulissants (125,126) et le cadre supérieur (101) portent des index servant à indiquer optiquement la position de pivotement du cadre supérieur (101), y compris les mâchoires de serrage (104,105) que porte ce cadre.

3. Combinaison selon la revendication 1, caractérisée en ce que la plaque de base et la tige portent des index servant à indiquer optiquement la position en rotation du cadre supérieur (101), y compris les mâchoires de serrage (104,105) que porte ce cadre.
